# EUROPÄISCHE PATENTSCHRIFT

(11) **EP 1 761 356 B1**
(45) Veröffentlichungstag und Bekanntmachung des Hinweises auf die Patenterteilung: **04.11.2009**
(21) Anmeldenummer: 05738834.0
(22) Anmeldetag: 11.03.2005
(51) Int. Cl.: B23C 5/02

(54) **ROTOR**
ROTOR
ROTOR

(30) Priorität: 25.06.2004 DE 202004010078 U
(43) Veröffentlichungstag der Anmeldung: 14.03.2007
(73) Patentinhaber: Gühring, Jörg, Dr., 72458 Albstadt (DE)
(72) Erfinder: KLEINER, Gilbert, 72514 Inzigkofen (DE)
(74) Vertreter: Eisele, Otten, Roth & Dobler
(86) Internationale Anmeldenummer: PCT/DE2005/000441
(87) Internationale Veröffentlichungsnummer: WO 2006/000169

(56) Entgegenhaltungen:
- DE-A1- 19 963 328
- US-A- 2 431 581

## Beschreibung

Die vorliegende Erfindung betrifft einen Rotor nach dem Oberbegriff des Anspruchs 1, wie er z.Bsp. aus der DE 19963328 bekannt ist.

### Stand der Technik:

Bei schnell drehenden Rotoren stellt die, infolge der einwirkenden Fliehkraft auftretende, radiale Aufweitung des Rotorgrundkörpers eine Grenze für die zulässige Betriebsdrehzahl dar. Diese Aufweitung hängt bei konstruktiv vorgegebenen geometrischen Abmessungen (Innen-, Außendurchmesser, etc.) von der Steifigkeit der Einzelteile der für ihre Herstellung verwendeten Materialien ab.

Neben der Aufweitung müssen auch die Unwucht und die Trägheitskräfte eines Rotors möglichst gering gehalten werden. Daher werden in der Praxis häufig Leichtmetall-Werkstoffe für den Grundkörper verwendet, in welchen Funktionselemente eingesetzt werden.

In der Werkzeugtechnik ist dies ein bekanntes Konstruktionsprinzip und.wird z.B. bei der Herstellung von HSC-Fräswerkzeuge (High-Speed-Cutting) zugrunde gelegt. So sind im Grundkörper aus Leichtmetall z.B. Stahlkassetten eingesetzt, an welchen Schneiden aus Hartmetall, PKD (PolyKristalline-Diamanten) etc. befestigt sind. Die Trägheits- und Unwuchtkräfte können somit gering gehalten werden. Allerdings ist die Gesamtverformung des Systems in hohem Maße von der Eigenverformung des Leichtmetall-Grundkörpers abhängig. Die beispielsweise im Grundkörper angeschraubten Einbauteile verlagern sich im Betrieb neben ihrer Eigenverformung zusätzlich um den Betrag der Grundkörper-Aufweitung. Die betriebsbedingte Gesamtverformung setzt sich somit aus der Summe der Grundkörper-Verformung plus Einbauteil-Verformung zusammen.

### Aufgabe und Vorteile der Erfindung:

Der vorliegenden Erfindung liegt die Aufgabe zugrunde einen Rotor der eingangs genannten Art derart weiterzubilden, dass damit eine höhere Betriebssicherheit bzw. eine höhere Genauigkeit bei der Bearbeitung von Werkstücken erreicht wird.

Diese Aufgabe wird durch die Merkmale des Anspruchs 1 gelöst. Aus den nachfolgenden, abhängigen Ansprüchen gehen weitere, vorteilhafte Ausführungsformen und Weiterbildungen der Erfindung hervor.

Die Erfindung geht von einem Rotor aus, insbesondere von einem rotierenden Werkzeug zur spanabtragenden Werkstückbearbeitung, umfassend einen Rotorgrundkörper mit an dessen Umfang verteilt positionierten Aufnahmen, die zur Bestückung des Rotors mit Funktionselementen ausgebildet sind. Der Kern der Erfindung liegt darin, dass der Rotorgrundkörper aus einem ersten, radial außen liegenden Grundkörperelement und aus einem zweiten, radial innen liegenden Grundkörperelement besteht, wobei das erste und zweite Grundkörperelement derart zueinander angeordnet sind, dass entlang einer zwischen diesen beiden ausgebildeten, umlaufenden Trennfuge, in nicht rotierendem Zustand des Rotors, ein Fugendruck vorherrscht, und das radial innere Grundkörperelement einen größeren E-Modul aufweist, als das radial äußere Grundkörperelement.

Daraus ergibt sich ein Rotor in einer Verbundkonstruktion aus Werkstoffen unterschiedlicher E-Module, wobei der in den Rotorgrundkörper eingefügte vorzugsweise ringförmige Körper mit seinem gegenüber dem Grundkörper höherem E-Modul eine versteifende Eigenschaft auf diesen ausübt.

Dem Aufbau eines solchen Rotors liegt die Erkenntnis zugrunde, dass ein aus zwei Teilen mit unterschiedlichen E-Modulen gefertigter Körper über einen bestimmten Belastungsbereich hinweg Verformungseigenschaften aufweist, die, belastungsbezogen, deutlich günstiger sind als die Verformungseigenschaften eines einstückigen Körpers, sofern in einer zwischen den beiden Grundkörperelementen umlaufend ausgebildeten Trennfuge ein Fugendruck vorherrscht.

Für rotierende Körper wurde in diesem Zusammenhang herausgefunden, dass dabei eine Anordnung mit einem ersten, radial innen liegenden und einem zweiten, radial außen liegenden Grundkörperelement, beispielsweise für einen Fräskopf, das radial innere Grundkörperelement den höheren E-Modul aufweisen muss, also die geringeren Verformungseigenschaften. Wichtig ist dabei, dass zwischen dem inneren Grundkörperelement, welches jedoch nicht zwingend einstückig ausgebildet sein muss, und dem äußeren Grundkörperelement mit dem gegenüber dem ersten aus einem niedrigeren E-Modul gefertigten Werkstoff, ein derartiger Fugendruck in der Trennfuge herrschen muss, dass sowohl radiale als auch tangentiale Kräftübertragungen zwischen diesen beiden Grundkörperelementen möglich sind. Die beiden Grundkörperelemente wirken daher vorteilhafterweise so zusammen, dass ein Fugendruck über den gesamten Betriebsdrehzahlbereich des rotierenden Körpers vorherrscht, wenigstens jedoch über einen Teilbereich.

Durch die mechanischen Zwangsbedingungen in der Trennfuge sind die radialen Spannungen sowie die tangentialen Dehnungen des äußeren und des inneren Grundkörperelements am Fügedurchmesser DF der Trennfuge gleich groß. Die für die Aufweitung des äußeren Grundkörperelementes maßgebende Tangentialspannung entspricht bei unterschiedlichen E-Modulen neben einem untergeordneten radialen Spannungsteil, im Wesentlichen der, um den Faktor E-Modul (äußeres Grundkörperelement) zu E-Modul (inneres Grundkörperelement) Ea/Ei verminderten Tangentialspannung des Innenteils, und liegt bei ausreichendem Fugendruck und geeigneten geometrischen Abmessungen, stets unter dem Wert eines einteiligen Vergleichsrotors.

Die Erzeugung des Fugendrucks zwischen den beiden Grundkörperelementen kann beispielsweise durch einen Pressverband realisiert werden. Als weitere Möglichkeiten der Erzeugung eines Fugendruckes in der Trennfuge zwischen den beiden Grundkörperelementen bieten sich Schraubverbände oder Übermaße im Bereich der Trennfuge an.

Durch eine über den gesamten Umfangsbereich der Trennfuge verteilte Kraftübertragung ergibt sich eine gleichmäßig stützende Wirkung des Grundkörperelementes mit dem höheren E-Modul auf das Grundkörperelement mit niedrigem E-Modul.

Zur Erzielung dieser verbesserten Verformeigenschaften des Rotorgrundkörpers sollte wenigstens über einen Teilabschnitt der axialen Erstreckung des Rotors eine Verbindung unter Fugendruck zwischen den beiden Grundkörperelementen vorherrschen. Vorteilhafterweise ist dies zumindest der Bereich; in welchem während des Einsatzes des Rotors die größten Belastungsmomente auf diesen einwirken.

Beispielsweise kann dies der Bereich der axialen Erstreckung des Rotors sein, der sich mit dem Bereich deckt, in welchem an seinem Umfang verteilt die Funktionselemente angeordnet sind, im Falle eines Fräskopfs wäre dies beispielsweise der Aufnahmebereich für die Schneidplattenhalter.

Um die zu beschleunigenden Massen des Grundkörpers bei sinnvollen Abmessungen möglichst gering halten zu können, kann es vorteilhaft sein, das innere Grundkörperelement ringförmig auszubilden. Da der Rotor auch in seinem äußeren Umfang vorteilhafterweise rund ausgebildet ist, ergibt sich zumindest in dem Bereich, in dem die beiden Grundkörperelemente axial übereinanderliegend zusammengefügt sind, zumindest ein zweiteiliger, ringförmiger Aufbau mit unterschiedlichen Durchmessern für die einzelnen Funktionselemente. Vorteilhafterweise liegt dabei das Verhältnis eines Durchmessers (DF), auf dem die ringförmige Trennfuge verläuft, zu einem Außendurchmesser (DA) des radial außen liegenden Grundkörperelementes etwa im Bereich zwischen 0,3 und 0,9. Die Erkenntnis der verbesserten Betriebseigenschaften gilt zwar auch in einem breiteren Verhältnisbereich, dieser Bereich hat sich jedoch aus der zu betrachtenden Parameterschar im Verlaufe umfangreicher numerischer und analytischer Untersuchungen als besonders vorteilhaft herausgestellt.

Dabei wurde auch festgestellt, dass die Wandstärke des inneren Grundkörperelementes vorteilhafterweise mindestens 5 % des Außendurchmessers des radial außen liegenden Grundkörperelementes beträgt.

Für spezielle Anwendungsfälle kann es vorteilhaft sein, dass das radial innere Grundkörperelement als Teil einer Werkzeugaufnahme bzw. als Kupplungselement zur Adaption an eine Werkzeugmaschinenspindel ausgebildet ist. Dies kann beispielsweise den Vorteil haben, dass der Rotor in dem Bereich, in dem er selbst fest gespannt wird, aus einem seine Betriebszeit verlängernden, widerstandsfähigem Material ausgebildet ist.

Als zusätzlich vorteilhafte Eigenschaft kann das radial innere Grundkörperelement Befestigungselemente zur Fixierung der Funktionselemente aufweisen und/oder zur Aufnahme solcher Befestigungselemente geeignet sein. Dadurch können die Funktionselemente auch an dem mechanisch stabileren Grundkörperelement fixiert werden. Solche Befestigungselemente können beispielsweise als Widerlager, Schraubgewinde, Klammern, Haken und dergleichen mehr ausgebildet sein. Die Widerlager können Bohrungen oder Schlitze zum radialen Durchgang durch den Innenring aufweisen. An Gewinden in radial ausgerichteten Bohrungen können Schrauben die Funktionselemente fixieren. Mittels Klammern, Haken und dgl. kann eine Fixierung aber auch seitlich an dem Innenring erfolgen, insbesondere in Zusammenwirkung mit weiteren Mitteln zur Befestigung der Funktionselemente. Vorteilhaft ist dabei, dass mindestens der größere Teil der Befestigungskräfte durch das Grundkörperelement mit den höheren E-Modul aufgenommen werden kann. Insbesondere bei hohen Drehzahlen mit Drehzahlbereichen von 15.000 Umdrehungen pro Minute bis 20.000 Umdrehungen pro Minute und mehr, wie sie derzeit in der industriellen Fertigung üblich sind, kann sich eine solche Fixierung vorteilhaft auswirken.

### Zeichnung:

Ein Ausführungsbeispiel der Erfindung ist in den beigefügten Zeichnung unter Angabe weiterer Vorteile und Einzelheiten näher erläutert. Die beigefügten Figuren zeigen eine mögliche Ausführungsform der vorliegenden Erfindung.

Es zeigen:
- Figur 1: eine Stirnansicht eines erfindungsgemäßen Rotors in der Form eines Fräskopfs; und
- Figur 2: die Schrägansicht eines Teilausschnittes aus Figur 2.

In der Stirnansicht des erfindungsgemäßen Rotors 1 wird der Rotorgrundkörper 2 durch die beiden ringförmigen Grundkörperelemente 3, 4 ausgebildet, welche an der rund umlaufenden, den erfindungsgemäßen Fugendruck aufweisenden Trennfuge 5 aneinandergrenzen.

Der erforderliche Fugendruck ist dabei wenigstens über umfänglich an der Trennfuge verteilt angeordnete Fixierpunkte oder bereiche im Rotorgrundkörper eingeleitet. Vorzugsweise kann dies im vorliegenden Beispiel im Bereich um die Befestigungselemente 8 herum der Fall sein, mittels denen die Funktionselemente 7 radial nach innen hin mit dem Kopf 9 am Grundkörperelement 4 befestigt sind. Vorzugsweise wirkt der erfindungsgemäße Fugendruck jedoch über den kompletten Umfangsbereich der Trennfuge 5 zwischen den beiden Grundkörperelementen 3 und 4.

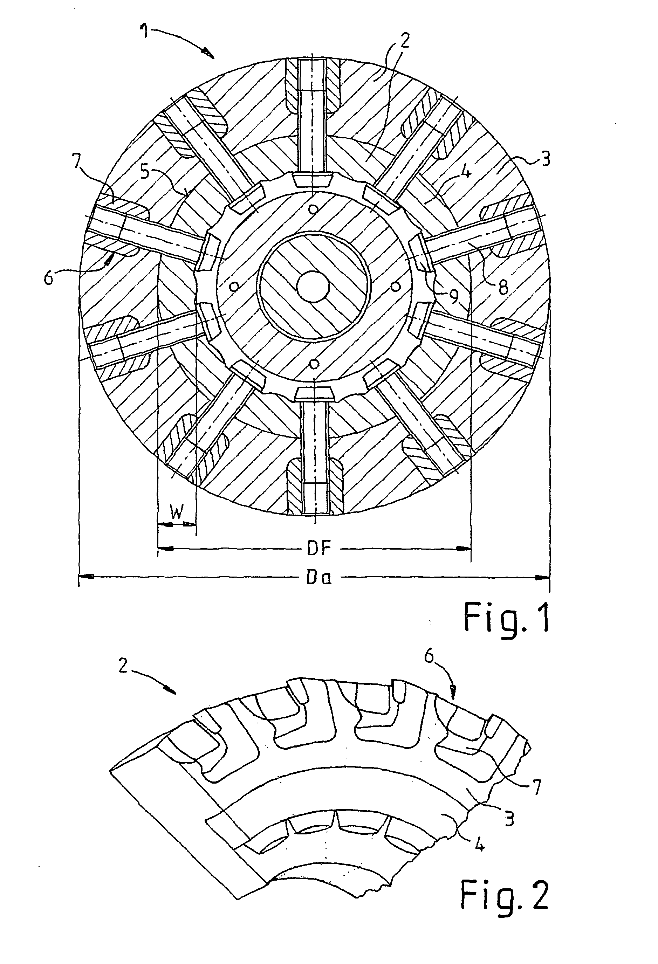

Die Figur 2 zeigt ein Beispiel dafür, dass die beiden Grundkörperelemente 3, 4 wenigstens über einen Teilabschnitt der axialen Erstreckung des Rotors 1 miteinander verbunden sind. Hierbei ist in der gleichen axialen Erstreckung des Rotors 1, in welcher die radial außen am Umfang verteilten Funktionselemente 7 in ihren Aufnahmen 6 angeordnet sind, das zweite Grundkörperelement 4 mit dem ersten Grundkörperelement vereinigt. Da aufgrund der gegenüber dem Grundkörperelement 3 höheren Dichte der Funktionselemente 7 in diesem Bereich des Rotors 1 die größten Verformungen während des Betriebs auftreten, ist die Anordnung des zweiten Grundkörperelementes 4 in diesem axialen Abschnitt des Rotorgrundkörpers 2 am wirksamsten.

In der Figur 1 sind durch die Pfeile mit den Bezeichnungen W, DF, Da, die Bauteilmaße gekennzeichnet, die zur Bestimmung der Verhältnisse zwischen dem Durchmesser DF der ringförmigen Trennfuge 5 und dem äußeren Durchmesser Da des äußeren ringförmigen Grundkörperelementes, sowie zur Bestimmung der Wandstärke W des inneren, ringförmigen Grundkörperelementes 4 herangezogen wurden.

Diese Ausführungsform nach den Figuren 1 und 2 ist nur ein beispielhafter Lösungsweg, der selbstverständlich in vollkommen gleichwertiger Weise durch andere Ausführungsformen ersetzt werden kann, ohne von der erfindungswesentlichen Idee abzuweichen.

### Bezugszeichenliste:

- 1: Rotor
- 2: Rotorgrundkörper
- 3: Grundkörperelement
- 4: Grundkörperelement
- 5: Trennfuge
- 6: Aufnahme
- 7: Funktionselement
- 8: Befestigungselement
- 9: Kopf

## Patentansprüche

1. Rotor zur spanabtragenden Werkstückbearbeitung, umfassend einen Rotorgrundkörper (2) mit an dessen Umfang verteilt positionierten Aufnahmen (6), die zur Bestückung des Rotors mit Funktionselementen (7) ausgebildet sind, wobei der Rotorgrundkörper (2) aus einem ersten, radial außen legenden Grundkörperelement (3) und einem zweiten, radial innen liegenden Grundkörperelement (4) besteht, wobei das erste und zweite Grundkörperelement derart zueinander geordnet sind, dass entlang einer zwischen diesen beiden ausgebildeten, umlaufenden Trennfuge (5), im nicht rotierenden Zustand des Rotors (19, ein Fugendruck vorherrscht, **dadurch gekennzeichnet, dass** das radial innere Grundkörperelement (4) einen höheren E-Modul aufweist als das radial äußere Grundkörperelement (3).

2. Rotor nach Anspruch 1, **dadurch gekennzeichnet, dass** das radial innen liegende Grundkörperelement (4) Befestigungselemente (8) zur Fixierung der Funktionselemente (7) aufweist und/oder zur Aufnahme solcher Befestigungselemente (8) geeignet ist.

3. Rotor nach Anspruch 1 oder 2, **dadurch gekennzeichnet, dass** das erste und zweite Grundkörperelement über eine Pressverbindung miteinander verbunden sind.

4. Rotor nach Anspruch 1, 2 oder 3, **dadurch gekennzeichnet, dass** das erste und zweite Grundkörperelement über Schraubenmittel miteinander verbunden sind.

5. Rotor nach einem der vorangehenden Ansprüche, **dadurch gekennzeichnet, dass** die beiden Grundkörperelemente (3, 4) wenigstens über einen Teilabschnitt der axialen Erstreckung des Rotors (1) miteinander verbunden sind, in welchen an seinem Umfang verteilt die Funktionselemente angeordnet sind.

6. Rotor nach einem der vorangehenden Ansprüche, **dadurch gekennzeichnet, dass** das radial innere Grundkörperelement (4) ringförmig ausgebildet ist.

7. Rotor nach einem der vorangehenden Ansprüche, **dadurch gekennzeichnet, dass** das Verhältnis eines Durchmessers (DF), auf dem die Trennfuge (5) verläuft, zu einem Außendurchmesser (Da) des radial außenliegenden Grundkörperelements (3) etwa im Bereich zwischen 0,3 und 0,9 liegt.

8. Rotor nach einem der vorangehenden Ansprüche, **dadurch gekennzeichnet, dass** die Wandstärke (W) des inneren Grundkörperelements (4) mindestens 5% des Außendurchmessers des radial außen liegenden Grundkörperelements (3) beträgt.

9. Rotor nach einem der vorangehenden Ansprüche, **dadurch gekennzeichnet, dass** das radial innen liegende Grundkörperelement (4) als Teil einer Werkzeugaufnahme bzw. als Kupplungselement zur Adaption an eine Werkzeugmaschinenspindel oder Antriebswelle ausgebildet ist.

10. Rotor nach einem der vorangehenden Ansprüche, **dadurch gekennzeichnet, dass** die Befestigungselemente (8) als Schraubenverbindungen ausgebildet sind.

11. Rotor nach einem der vorangehenden Ansprüche, **dadurch gekennzeichnet, dass** das radial außen liegende Grundkörperelement (3) Befestigungselemente (8) zur.Fixierung der Funktionselemente (7) aufweist und/oder zur Aufnahme solcher Befestigungselemente (8) geeignet ist.

12. Rotor nach einem der vorangehenden Ansprüche, **dadurch gekennzeichnet, dass** der Ring (4) im Querschnitt als Hohlprofil hoher Steifigkeit und geringen Gewichts ausgebildet ist.

13. Rotor nach einem der vorangehenden Ansprüche, **dadurch gekennzeichnet, dass** der Ring (4) als einfache Buchse, Rohr ausgebildet ist.

14. Rotor nach einem der vorangehenden Ansprüche, **dadurch gekennzeichnet, dass** der Ring (4) Teil einer Antriebswelle ist.

## Claims

1. Rotor for machining workpieces by cutting, comprising a rotor base body (2) with mounts (6) distributed around its circumference, which are designed for fitting the rotor with functional elements (7), whereby the rotor base body (2) comprises a first, radially outer base body element (3) and a second radially inner base body element (4), wherein the first and second base body elements are arranged relative to each other so that there is Joint pressure along an circumferential joining line (5) formed between the said base body elements, when the rotor (19) is not rotating, **characterised in that** the radially inner base body element (4) has a higher modulus of elasticity than the radially outer base body element (3).

2. Rotor according to claim 1, **characterised in that** the radially inner base body element (4) comprises fastening elements (8) for securing the functional elements (7) and/or is suitable for mounting such fastening elements (8).

3. Rotor according to claim 1 or 2, **characterised in that** the first and second base body elements are connected to one another by a compression connection.

4. Rotor according to claim 1, 2 or 3, **characterised in that** the first and second base body elements are connected to one another by screws.

5. Rotor according to one of the preceding claims, **characterised in that** the two base body elements (3, 4) are connected to one another at least over portion of the axial extension of the rotor (1), in which the functional elements are arranged distributed around its circumference.

6. Rotor according to one of the preceding claims, **characterised in that** the radially inner base body element (4) is designed to be annular.

7. Rotor according to one of the preceding claims, **characterised in that** the ratio of the diameter (DF), on which the joining line (5) runs, to the external diameter (Da) of the radially outer base body element (3) is in the region of between 0.3 and 0.9.

8. Rotor according to one of the preceding claims, **characterised in that** the wall thickness (W) of the inner base body element (4) is at least 5% of the external diameter of the radially outer base body element (3).

9. Rotor according to one of the preceding claims, **characterised in that** the radially inner base body element (4) is designed to be part of a tool mount or as a coupling element for adapting to a machine tool spindle or drive shaft.

10. Rotor according to one of the preceding claims, **characterised in that** the fastening elements (8) are in the form of screws.

11. Rotor according to one of the preceding claims, **characterised in that** the radially outer base body element (3) comprises fastening elements (8) for securing the functional elements (7) and or is suitable for mounting such fastening elements (8).

12. Rotor according to one of the preceding claims, **characterised in that** the ring (4) is designed in cross section to be a hollow profile with high rigidity and low weight.

13. Rotor according to one of the preceding claims, **characterised in that** the ring (4) is configured as a simple bushing or tube.

14. Rotor according to one of the preceding claims, **characterised in that** the ring (4) is part of a drive shaft.

## Revendications

1. Rotor destiné à l'usinage de pièces à usiner par enlèvement de copeaux, comprenant un corps de base de rotor (2) avec des logements (6) répartis sur son pourtour, lesquels logements sont réalisés pour l'équipement du rotor avec des éléments fonctionnels (7), le corps de base de rotor (2) étant composé d'un premier élément de corps de base (3) situé à l'extérieur dans le sens radial et d'un second élément de corps de base (4) situé à l'intérieur dans le sens radial, le premier et le second éléments de corps de base étant agencés l'un par rapport à l'autre de telle façon que le long d'une ligne de joint (5) périphérique formée entre ces deux éléments il prédomine une pression de joint lorsque le rotor n'est pas en rotation (19),
**caractérisé en ce que** l'élément de corps de base intérieur dans le sens radial (4) présente un coefficient d'élasticité supérieur à celui de l'élément de corps de base extérieur dans le sens radial (3).

2. Rotor selon la revendication 1,
**caractérisé en ce que** l'élément de corps de base situé à l'intérieur dans le sens radial (4) présente des éléments de fixation (8) destinés à la fixation des éléments fonctionnels (7) et/ou est adapté pour recevoir de tels éléments de fixation (8).

3. Rotor selon les revendications 1 ou 2,
**caractérisé en ce que** le premier et le second éléments de corps de base sont reliés entre eux par le biais d'une liaison à ajustement serré.

4. Rotor selon les revendications 1, 2 ou 3,
**caractérisé en ce que** le premier et le second éléments de corps de base sont reliés entre eux par le biais de moyens de vissage.

5. Rotor selon l'une des revendications précédentes,
**caractérisé en ce que** les deux éléments de corps de base (3, 4) sont reliés entre eux au moins par le biais d'un segment partiel de l'étendue axiale du rotor (1), dans lequel sont agencés les éléments fonctionnels, répartis sur son pourtour.

6. Rotor selon l'une des revendications précédentes,
**caractérisé en ce que** l'élément de corps de base intérieur dans le sens radial (4) est réalisé de forme annulaire.

7. Rotor selon l'une des revendications précédentes,
**caractérisé en ce que** le rapport entre un diamètre (DF), sur lequel s'étend la ligne de joint (5), et un diamètre extérieur (Da) de l'élément de corps de base situé à l'extérieur dans le sens radial (3) est approximativement compris entre 0,3 et 0,9.

8. Rotor selon l'une des revendications précédentes, **caractérisé en ce que** l'épaisseur de paroi (W) de l'élément de corps de base intérieur (4) représente au moins 5 % du diamètre extérieur de l'élément de corps de base situé à l'extérieur dans le sens radial (3).

9. Rotor selon l'une des revendications précédentes,
**caractérisé en ce que** l'élément de corps de base situé à l'intérieur dans le sens radial (4) est réalisé en tant que partie d'un logement d'outil ou en tant qu'élément d'accouplement pour l'adaptation sur une broche de machine-outil ou un arbre d'entraînement.

10. Rotor selon l'une des revendications précédentes,
**caractérisé en ce que** les éléments de fixation (8) sont réalisés sous forme de liaisons à visser.

11. Rotor selon l'une des revendications précédentes,
**caractérisé en ce que** l'élément de corps de base situé à l'extérieur dans le sens radial (3) présente des éléments de fixation (8) destinés à la fixation des éléments fonctionnels (7) et/ou est adapté pour recevoir de tels éléments de fixation (8).

12. Rotor selon l'une des revendications précédentes,
**caractérisé en ce que** l'anneau (4) est réalisé, en section transversale, sous forme de profil creux de haute rigidité et de faible poids.

13. Rotor selon l'une des revendications précédentes,
**caractérisé en ce que** l'anneau (4) est réalisé sous forme de simple douille, tube.

14. Rotor selon l'une des revendications précédentes,
**caractérisé en ce que** l'anneau (4) fait partie d'un arbre d'entraînement.
